# EUROPÄISCHE PATENTSCHRIFT

(11) **EP 3 575 554 B1**
(45) Veröffentlichungstag und Bekanntmachung des Hinweises auf die Patenterteilung: **06.01.2021**
(21) Anmeldenummer: 19174861.5
(22) Anmeldetag: 16.05.2019
(51) Int. Cl.: F01D 5/18, F01D 11/04, F01D 5/08

(54) **LAUFSCHAUFEL FÜR EINE STRÖMUNGSMASCHINE**
TURBINE BLADE FOR A FLOW ENGINE
AUBE POUR UNE TURBOMACHINE

(30) Priorität: 18.05.2018 DE 102018207873
(43) Veröffentlichungstag der Anmeldung: 04.12.2019
(73) Patentinhaber: MTU Aero Engines AG, 80995 München (DE)
(72) Erfinder: Feldmann, Manfred, 82223 Eichenau (DE)

(56) Entgegenhaltungen:
- EP-A2- 2 436 879
- US-A1- 2014 356 172
- US-A1- 2015 322 796

## Beschreibung

### Technisches Gebiet

Die vorliegende Erfindung betrifft eine Laufschaufel zum Anordnen im Heißgaskanal einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der Brennkammer dahinter mit hinzu gemischtem Kerosin verbrannt. Das entstehende Heißgas, eine Mischung aus Verbrennungsgas und Luft, durchströmt die Turbine dahinter und wird dabei expandiert. Die Turbine weist in der Regel mehrere Stufen auf, die jeweils aus einem Leitschaufelkranz und einem nachgelagerten Laufschaufelkranz aufgebaut sind. In den einzelnen Stufen wird dem strömenden Heißgas anteilig Energie entzogen und in eine Rotation der Laufschaufelkränze umgesetzt (diese kann dann z. B. zumindest anteilig zum Antreiben des Verdichters genutzt werden).

Die Laufschaufelkränze weisen in der Regel jeweils mehrere Laufschaufeln auf. Eine jeweilige Laufschaufel hat jeweils ein Laufschaufelblatt, das im Heißgaskanal angeordnet ist und im Betrieb von dem Heißgas umströmt wird. Radial innerhalb davon weist die Laufschaufel eine Innenplattform mit einem Innendeckband auf, welches den Heißgaskanal nach radial innen begrenzt. Dabei ist es aus dem Stand der Technik bekannt, dass in der Innenplattform eine Kammer ausgebildet ist, die nach radial außen vom Innendeckband und axial zwischen einer vorderen und einer hinteren Kammerwand eingefasst ist.

Beispiele für Laufschaufeln sind aus den Dokumenten US20140356172A1, EP2436879A2 und US20150322796A1 bekannt.

### Darstellung der Erfindung

Der vorliegenden Erfindung liegt das technische Problem zugrunde, eine besonders vorteilhafte Laufschaufel anzugeben.

Dies wird erfindungsgemäß mit der Laufschaufel gemäß Anspruch 1 gelöst. Die Kammer, die in deren Innenplattform ausgebildet ist, wird von einer axialen Schottwand in einen radial inneren und einen radial äußeren Kammerwandbereich geteilt. Die axiale Schottwand erstreckt sich dabei zwischen einer vorderen Dichtplatte, die an der vorderen Kammerwand angeordnet ist, und einer hinteren Dichtplatte, die an der hinteren Kammerwand angeordnet ist. Die Dichtplatten sind jeweils an der der Kammer entgegengesetzten Seite der jeweiligen Kammerwand angeordnet, die vordere Dichtplatte erstreckt sich also von der vorderen Kammerwand weg nach axial vorne und die hintere Dichtplatte von der hinteren Kammerwand weg nach axial hinten. In einem Turbinenmodul können die Dichtplatten jeweils zusammen mit einem anschließenden Leitschaufelkranz eine sogenannte Labyrinthdichtung bilden, also den Heißgaskanal nach radial innen dichten bzw. sperren (siehe unten im Detail).

Im Betrieb wird dazu radial innerhalb der Innenplattform ein Sperrfluid eingeblasen, womit bspw. die Schaufelfußverbindung zur Turbinenscheibe gegenüber den hohen Temperaturen im Heißgaskanal abgeschirmt wird. Der Heißgaskanal ist radial außerhalb der Dichtplatten definiert, radial innerhalb davon liegt der vom Sperrfluid durchströmte Scheibenrand mit den Schaufelbefestigungen. Erfindungsgemäß erstreckt sich nun die axiale Schottwand, welche die Kammer radial innerhalb des Innendeckbands zweiteilt, zwischen der vorderen und der hinteren Dichtplatte. In einem Axialschnitt betrachtet läuft die axiale Schottwand also auf Höhe der vorderen Dichtplatte in die vordere Kammerwand und auf Höhe der hinteren Dichtplatte in die hintere Kammerwand.

Die resultierende Teilung der Kammer in die Kammerwandbereiche ist insoweit von Vorteil, als über Spaltströmungen etc. der äußere Kammerwandbereich jedenfalls zum Großteil aus dem Heißgaskanal befüllt wird, wohingegen der innere Kammerwandbereich größtenteils aus dem Sperrluftbereich befüllt wird. Die Schottwand verhindert dabei, dass es zu einer maßgeblichen Durchmischung der Fluide zwischen den Kammerwandbereichen kommt, es stellt sich also keine Mischtemperatur ein. Das Heißgas strömt im Wesentlichen nur in den äußeren Kammerwandbereich ein, und es tritt aus diesem dann auch wieder in den Heißgaskanal aus. Dies bedeutet umgekehrt, dass über die Kammer kaum Heißgas in den Scheibenrandbereich gelangt, was die Aufheizung der Bauteile bzw. Komponenten dort verringert. Dementsprechend lassen sich auch thermische Dehnungen im Scheibenrandbereich reduzieren. Damit kann also bspw. eine Spaltbildung begrenzt werden, etwa zwischen statischer Dichtung und Rotor.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- bzw. Verfahrens- oder auch Verwendungsaspekten unterschieden wird; jedenfalls implizit ist die Offenbarung hinsichtlich sämtlicher Anspruchskategorien zu lesen. Es beziehen sich insbesondere die Erläuterungen zur Laufschaufel auch auf ein Turbinenmodul bzw. entsprechende Betriebsverfahren.

Generell beziehen sich "axial" bzw. die "axiale Richtung" auf die Drehachse, um welche die Laufschaufel im Betrieb rotiert, und die bspw. mit der Längsachse der Strömungsmaschine bzw. des Turbinenmoduls zusammenfällt. Darauf beziehen sich auch "radial" und "umlaufend", sowie die zugehörigen Richtungen. "Innen" und "außen" betreffen ohne ausdrücklich gegenteilige Angabe die Radialrichtungen, wobei "vorne"/"vordere" und "hinten"/"hintere" eine axiale Abfolge betreffen ("vorne" meint stromaufwärts bezogen auf die Heißgasströmung, "hinten" meint stromabwärts).

Die axiale Schottwand kann für sich die Kammer in die Kammerwandbereiche unterteilen, sie kann dies aber auch zusammen mit anderen Elementen tun, bspw. mit einer Versteifungsrippe oder einem Dämpfer bzw. dessen Aufnahme. Die axiale Schottwand hat in einem Axialschnitt betrachtet eine Erstreckung in axialer Richtung, aber nicht zwingend ausschließlich. Eine anteilig auch radiale Erstreckung kann sogar bevorzugt sein, wenn die vordere und hintere Dichtplatte zueinander radial versetzt sind. Soweit generell auf einen "Axialschnitt" Bezug genommen wird, betrifft dies eine Schnittebene, in welcher die Drehachse liegt.

Bei einer bevorzugten Ausführungsform läuft die Schottwand in einem Axialschnitt betrachtet derart in die hintere Kammerwand, dass eine Verlängerung der axialen Schottwand nach hinten im Bereich der Kammerwand einen Überlapp mit der hinteren Deckplatte hat, wobei letztere inkl. etwaiger Verrundungsradien zugrundegelegt wird, mit denen sie radial innen und/oder radial außen in die Kammerwand läuft. Die radiale Erstreckung der Dichtplatte bemisst sich somit nach dem Auslauf der Verrundungsradien, also dem Auslauf des radial äußeren und radial inneren Verrundungsradius (mit den Verrundungsradien geht die Dichtplatte in die Kammerwand über). Damit wird die Verlängerung der Schottwand nach hinten verglichen, wozu die Schottwand bildlich gesprochen in die Kammerwand hinein fortgezeichnet wird. An bzw. in der Kammerwand soll es dann zumindest einen Überlapp geben. Die Verlängerung wird dabei in der Erstreckungsrichtung der Schottwand gebildet, also bspw. schräg zur Drehachse, wenn sich die Schottwand schräg zur Drehachse erstreckt. Generell wird die Erstreckungsrichtung entlang einer Mittenlinie der Schottwand genommen, die in dem Axialschnitt betrachtet mittig darin liegt.

Der Überlapp im Bereich der hinteren Kammerwand kann hinsichtlich der Strömungsführung von Vorteil sein, also ein Einströmen von Heißgas in den Scheibenrandbereich reduzieren bzw. unterbinden helfen. Dies gilt nicht nur an der hinteren Kammerwand und der hinteren Dichtplatte, sondern analog auch an der nachstehend diskutierten vorderen Kammerwand.

In bevorzugter Ausgestaltung läuft die axiale Schottwand in einem Axialschnitt betrachtet derart in die vordere Kammerwand, dass ihre Verlängerung dort mit der vorderen Dichtplatte überlappt. Die vordere Dichtplatte wird hierbei analog den Erläuterungen zur hinteren Dichtplatte incl. etwaiger Verrundungen betrachtet, sie bemisst sich also nach dem Auslauf des radial inneren und radial äußeren Verrundungsradius der vorderen Dichtplatte (mit den Verrundungsradien läuft letztere in die vordere Kammerwand).

In bevorzugter Ausgestaltung erstreckt sich die axiale Schottwand in dem Axialschnitt betrachtet geradlinig zwischen der vorderen Kammerwand und der hinteren Kammerwand. Die axiale Schottwand ergibt sich dann also als kürzeste Verbindungslinie zwischen vorderer und hinterer Dichtplatte, wobei sie je nach Radialposition der Dichtplatten auch schräg zur Längsachse liegen kann (geradlinig meint also nicht zwingend achsparallel). Im Allgemeinen ist eine geradlinige Erstreckung indessen nicht zwingend, sondern kann die Schottwand im Axialschnitt betrachtet auch mit (einer) Krümmung(en) und/oder (einem) Knick(en) verlaufen.

Bei einer bevorzugten Ausführungsform ist die axiale Schottwand einstückig mit der übrigen Laufschaufel ausgebildet, bspw. gemeinsam damit gegossen. Ein Gussteil ist indes nicht zwingend, eine einstückige Ausgestaltung ist bspw. auch im Falle einer generativen Herstellung möglich.

Bei einer alternativ bevorzugten Ausführungsform ist die axiale Schottwand als separates Teil in die Kammer eingesetzt. Dazu können in der Kammer bspw. Haltenocken angeordnet sein, an denen die Schottwand gegen die Fliehkraft abgestützt wird. Die mehrstückige, also eingesetzte bzw. -gelegte Schottwand kann bspw. im Falle einer gegossenen Schaufel den Guss vereinfachen. Die Schottwand kann bspw. aus einem Blech vorgesehen und in die Kammer eingelegt werden.

In bevorzugter Ausgestaltung ist jedenfalls ein Abschnitt der vorderen Dichtplatte radial innerhalb der hinteren Dichtplatte angeordnet, bevorzugt ist die gesamte vordere Dichtplatte nach radial innen versetzt. Generell ist die vordere Dichtplatte gegenüber dem Innendeckband, konkret einem vorderen Abschnitt davon (Übergang zur vorderen Kammerwand) nach radial innen versetzt. Ebenso ist die hintere Dichtplatte gegenüber dem Innendeckband, konkret einem hinteren Abschnitt davon (Übergang in die hintere Kammerwand) nach radial innen versetzt.

Die Erfindung betrifft auch ein Turbinenmodul mit einer vorliegend offenbarten Laufschaufel. Diese ist dann Teil eines Laufschaufelkranz, der bevorzugt eine Mehrzahl baugleicher und drehsymmetrisch zueinander angeordneter Laufschaufeln aufweist. Generell weist die Laufschaufel radial innerhalb der Innenplattform einen Schaufelfuß zur Montage an der Laufscheibe auf. Dieser kann in axialer Richtung gesehen bspw. eine Tannenbaumform haben und dann in einer dazu komplementären Schaufelfußaufnahme der Laufscheibe formschlüssig gehalten sein, was für den vorliegenden Erfindungsgegenstand nicht weiter im Einzelnen von Bedeutung ist.

In bevorzugter Ausgestaltung des Turbinenmoduls ist die hintere Dichtplatte der Laufschaufel radial zwischen einer Innenplattform einer darauffolgenden (hinteren) Leitschaufel und einem Dichtsteg des zugehörigen Leitschaufelkranzes angeordnet. Je nach Ausgestaltung kann dieser Dichtsteg bspw. an einer sich radial erstreckenden Dichtungsträgerwand angeordnet sein, die durch eine Speichenzentrierung über die Leitschaufeln geführt wird und andererseits radial innen eine Dichtung zum Rotor hin trägt, z. B. eine Honigwabendichtung. Dies zur Illustration, maßgeblich für den vorliegenden Gegenstand ist vielmehr die Anordnung der hinteren Dichtplatte zwischen Innenplattform der Leichtschaufel und Dichtsteg, auch als "Fischmauldichtung" bezeichnet, also das Zusammenwirken als Labyrinthdichtung.

Bei einer bevorzugten Ausführungsform bildet die vordere Dichtplatte mit einem vorgelagerten (vorderen) Leitschaufelkranz eine Fischmauldichtung, ist sie nämlich radial zwischen der Innenplattform der vorderen Leitschaufel und einem Dichtsteg des vorderen Leitschaufelkranzes angeordnet.

Die Erfindung betrifft auch ein Verfahren zum Betreiben eines vorliegend offenbarten Turbinenmoduls. Dabei wird der äußere Kammerwandbereich aus dem Heißgaskanal mit Heißgas befüllt und wird der innere Kammerwandbereich aus dem Scheibenrandbereich mit dem Sperrfluid befüllt. Dies erfolgt bspw. über Spalte zwischen umlaufend benachbarten Laufschaufeln bzw. deren Innenplattformen. Mit zusätzlichen Abdichtungen bzw. Hinterschneidungen etc. ließe sich zwar auch eine weitergehende Abdichtung dieser Spalte erreichen und damit die Spaltströmung an sich verringern, allerdings bedeutet dies zusätzlichen Aufwand, weswegen der vorliegende Ansatz dahin geht, die Spaltströmungen nicht zwingend vollständig zu unterbinden, sie aber mit der axialen Schottwand für den Scheibenrandbereich weitgehend unschädlich zu machen.

In bevorzugter Ausgestaltung stellt sich im Betrieb in dem inneren und dem äußeren Kammerwandbereich jeweils ein Druck ein, wobei der Druck in dem inneren Kammerwandbereich um den Betrag nach höchstens 20 % von dem Druck im äußeren Kammerwandbereich abweicht. Weitere vorteilhafte Obergrenzen liegen bei dem Betrag nach (+/-) höchstens 15 %, 10 % bzw. 5 % (in der Reihenfolge der Nennung zunehmend bevorzugt). Bevorzugt sind die Drücke im Wesentlichen gleich groß, sodass es kaum zum Austausch zwischen innerem und äußerem Kammerwandbereich kommt.

Die Erfindung betrifft auch die Verwendung einer vorliegend offenbarten Laufschaufel in einem entsprechenden Verfahren.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Fig. 1: ein Strahltriebwerk in einem Axialschnitt;
- Fig. 2: zur Illustration eine nicht erfindungsgemäße Laufschaufel ohne axiale Schottwand;
- Fig. 3: eine erfindungsgemäße Laufschaufel mit einer axialen Schottwand radial innerhalb des Innendeckbands.

### Bevorzugte Ausführung der Erfindung

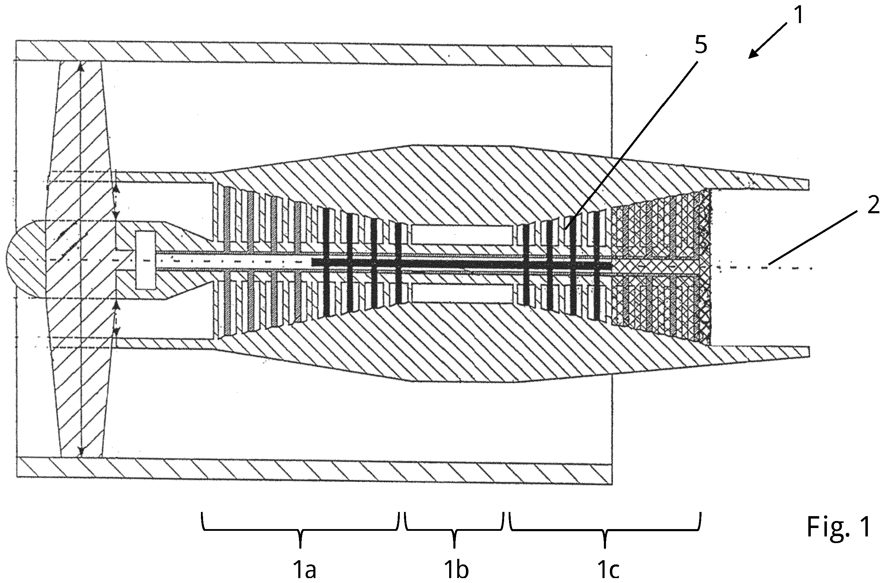

**Fig. 1** zeigt eine Strömungsmaschine 1, konkret ein Mantelstromtriebwerk, in einem Axialschnitt. Die Strömungsmaschine 1 gliedert sich funktional in Verdichter la, Brennkammer 1b und Turbine 1c. Sowohl der Verdichter 1a als auch die Turbine 1c sind jeweils aus mehreren Stufen aufgebaut. Jede der Stufen setzt sich aus einem Leitschaufelkranz und einem darauffolgenden Laufschaufelkranz zusammen. Im Verdichter 1a wird die angesaugte Luft komprimiert, sie wird dann in der nachgelagerten Brennkammer 1b mit hinzugemischten Kerosin verbrannt. Das Heißgas durchströmt den Heißgaskanal 5 und treibt dabei die Laufschaufelkränze an, die um die Drehachse 2 rotieren.

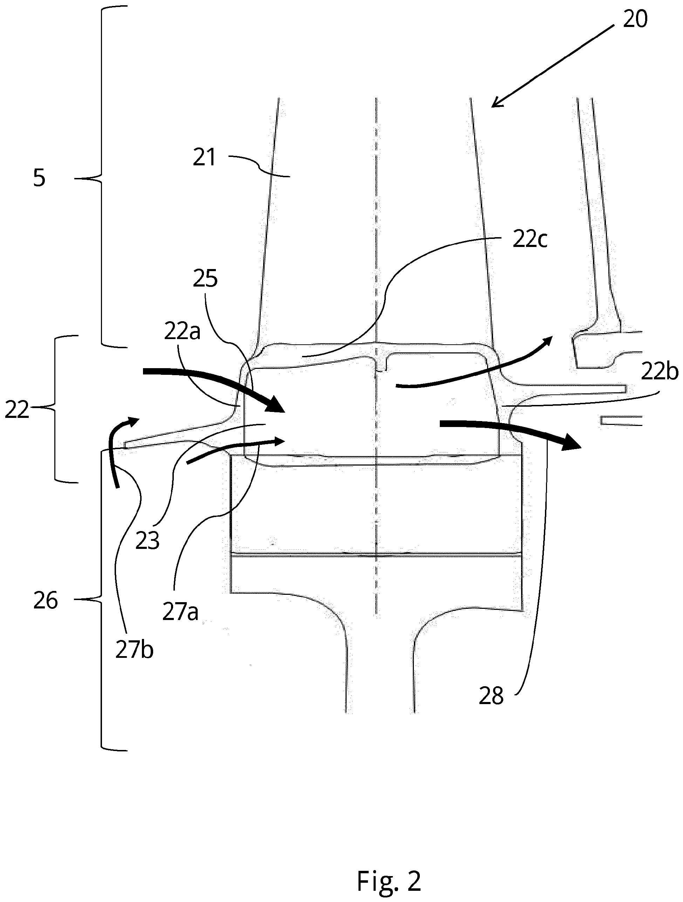

**Fig. 2** zeigt eine Laufschaufel 20, deren Schaufelblatt 21 im Betrieb von dem Heißgas umströmt wird. Radial innerhalb davon weist die Laufschaufel 20 eine Innenplattform 22 auf, in der eine Kammer 23 ausgebildet ist. Diese Kammer 23 wird axial von einer vorderen Kammerwand 22a und einer hinteren Kammerwand 22b begrenzt, nach radial außen wird sie von dem Innendeckband 22c eingefasst.

Im Betrieb strömt aus dem Heißgaskanal 5 Heißgas 25 in die Kammer 23. Zugleich strömt aus einem Scheibenrandbereich 26 ein Sperrfluid 27 (Verdichterluft) in die Kammer 23 (im Einzelnen strömt ein Teil 27a davon in die Kammer 23 und umströmt ein anderer Teil 27b die vordere Dichtplatte). Das Sperrfluid 27 soll den Scheibenrandbereich 26 zum Heißgaskanal 5 hin abschirmen, siehe unten im Detail. In der Kammer 23 mischt es sich mit dem einströmenden Heißgas 25, es stellt sich eine gegenüber dem Sperrfluid höhere Mischtemperatur ein. Entsprechend hat auch ein aus der Kammer 23 in den hinteren Scheibenrandbereich ausströmendes Fluid 28, eine Mischung aus Heißgas und Sperrfluid, eine erhöhte Temperatur. Dies führt zu einer Aufheizung der nachgelagerten Bauteile bzw. Komponenten im Rotorrandbereich, was bspw. zu erhöhten thermischen Dehnungen und dementsprechend größeren Spalten und damit Leckagen führen kann.

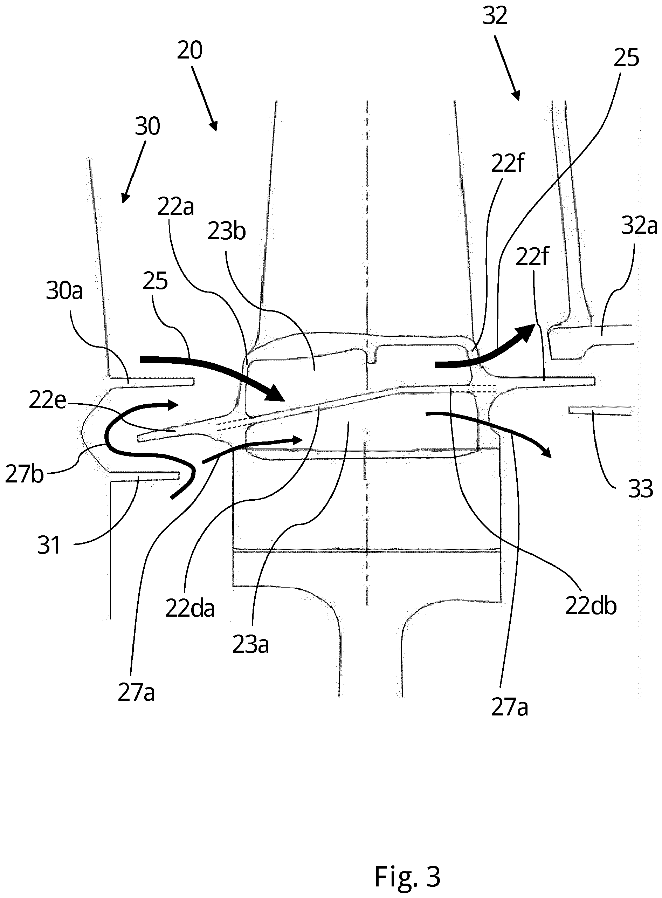

**Fig. 3** zeigt eine erfindungsgemäße Laufschaufel 20, deren Aufbau prinzipiell jenem der Laufschaufel gemäß Fig. 2 vergleichbar ist. Teile mit derselben bzw. vergleichbarer Funktion sind mit denselben Bezugszeichen versehen, es wird auf die Beschreibung zu Fig. 2 verwiesen. Im Unterschied dazu ist die Kammer 23 mit einer axialen Schottwand 22d zweigeteilt, nämlich in einen radial inneren Kammerwandbereich 23a und einen radial äußeren Kammerwandbereich 23b. Dabei erstreckt sich die axiale Schottwand 22d zwischen einer vorderen Dichtplatte 22e und einer hinteren Dichtplatte 22f.

Die vordere Dichtplatte 22e bildet gemeinsam mit einer Innenplattform 30a einer vorderen Leitschaufel 30 und einem Dichtsteg 31 des übrigen Leitschaufelkranzes eine Labyrinthdichtung. Gleichermaßen bildet die hintere Dichtplatte 22f gemeinsam mit einer Innenplattform 32a der hinteren Leitschaufel 32 und einem Dichtsteg 33 des zugehörigen Leitschaufelkranzes eine Labyrinthdichtung. Mit diesen Labyrinthdichtungen und dem radial innerhalb eingeblasenen Sperrfluid 27 wird der Scheibenrandbereich 26 zum Heißgaskanal 5 hin abgeschirmt.

Indem die axiale Schottwand auf Höhe der Dichtplatten 22e, fliegt, wird der äußere Kammerwandbereich 23b im Wesentlichen ausschließlich mit dem Heißgas 25 aus dem Heißgaskanal 5 befüllt. Der innere Kammerwandbereich 23a wird hingegen im Wesentlichen ausschließlich mit dem Sperrfluid 27 befüllt. Das Heißgas 25 aus dem äußeren Kammerwandbereich 23b strömt dann auch wieder in den Heißgaskanal 5 ab, in den Scheibenrandbereich 26 strömt das Sperrfluid 27. Es wird also eine Durchmischung und damit eine Erhöhung der Sperrfluidtemperatur vermieden, was hinsichtlich der Spalthaltigkeit etc. im Scheibenrandbereich 26 von Vorteil ist.

Konkret ist die axiale Schottwand 22d derart geformt, dass jeweils eine Verlängerung davon (strichliert angedeutet) in die jeweilige Kammerwand einen Überlapp mit den Verrundungen der jeweiligen Dichtplatte 22e,f hat.

**BEZUGSZEICHENLISTE**

| | |
|---|---|
| Strömungsmaschine | 1 |
| Verdichter | la |
| Brennkammer | 1b |
| Turbine | 1c |
| Drehachse | 2 |
| Heißgaskanal | 5 |
| Laufschaufel | 20 |
| Schaufelblatt | 21 |
| Innenplattform | 22 |
| Vordere Kammerwand | 22a |
| Hintere Kammerwand | 22b |
| Innendeckband | 22c |
| Axiale Schottwand | 22d |
| Vorderer Abschnitt | 22da |
| Hinterer Abschnitt | 22db |
| Vordere Dichtplatte | 22e |
| Hintere Dichtplatte | 22f |
| Kammer | 23 |
| Innerer Kammerwandbereich | 23a |
| Äußerer Kammerwandbereich | 23b |
| Heißgas | 25 |
| Scheibenrandbereich | 26 |
| Sperrfluid | 27 |
| Kammer durchströmender Teil | 27a |
| Dichtplatte umströmender Teil | 27b |
| Fluid | 28 |
| Vordere Leitschaufel | 30 |
| Innenplattform | 30a |
| Dichtsteg | 31 |
| Hintere Leitschaufel | 32 |
| Innenplattform | 32a |
| Dichtsteg | 33 |

## Patentansprüche

1. Laufschaufel (20) zum Anordnen in einem Heißgaskanal (5) einer Strömungsmaschine (1),
welche Laufschaufel (20) ein Schaufelblatt (21) und radial innerhalb davon eine Innenplattform (22) aufweist, in welcher eine Kammer (23) ausgebildet ist, die
- nach radial außen von einem Innendeckband (22c) der Innenplattform (22) begrenzt wird, und
- axial zwischen einer vorderen (22a) und einer hinteren Kammerwand (22b) der Innenplattform (22) begrenzt wird,
wobei
- an der vorderen Kammerwand (22a) eine vordere Dichtplatte (22e) angeordnet ist, die sich von der Kammer (23) nach axial vorne weg erstreckt, und
- an der hinteren Kammerwand (22b) eine hintere Dichtplatte (22f) angeordnet ist, die sich von der Kammer (23) nach axial hinten weg erstreckt,
und wobei ferner in der Kammer (23) eine axiale Schottwand (22d) angeordnet ist, welche
- die Kammer (23) in einen radial inneren (23a) und einen radial äußeren Kammerwandbereich (23b) teilt,
**dadurch gekennzeichnet, dass**
- die axiale Schottwand (22d) in einem Axialschnitt betrachtet auf Höhe der vorderen Dichtplatte (22e) in die vordere Kammerwand (22a) läuft und auf Höhe der hinteren Dichtplatte (22f) in die hintere Kammerwand (22b) läuft.

2. Laufschaufel (20) nach Anspruch 1, bei welcher in einem Axialschnitt betrachtet die axiale Schottwand (22d) derart in die hintere Kammerwand (22b) läuft, dass an der hinteren Kammerwand (22b) eine Verlängerung der axialen Schottwand (22d) in deren Erstreckungsrichtung nach hinten einen Überlapp hat mit der hinteren Dichtplatte (22f), und zwar unter Berücksichtigung eines etwaigen Verrundungsradius der hinteren Dichtplatte (22f) radial innen und/oder außen, wobei die hintere Dichtplatte (22f) also einschließlich etwaiger Verrundungsradien zugrundegelegt wird, mit denen sie radial innen und/oder radial außen in die Kammerwand läuft,.

3. Laufschaufel (20) nach einem der vorstehenden Ansprüche, bei welcher in einem Axialschnitt betrachtet die axiale Schottwand (22d) derart in die vordere Kammerwand (22a) läuft, dass an der vorderen Kammerwand (22a) eine Verlängerung der axialen Schottwand (22d) in deren Erstreckungsrichtung nach vorne einen Überlapp hat mit der vorderen Dichtplatte (22e), und zwar unter Berücksichtigung eines etwaigen Verrundungsradius der vorderen Dichtplatte (22e) radial innen und/oder außen, wobei die vordere Dichtplatte (22e) also einschließlich etwaiger Verrundungsradien zugrundegelegt wird, mit denen sie radial innen und/oder radial außen in die Kammerwand läuft,.

4. Laufschaufel (20) nach einem der vorstehenden Ansprüche, bei welcher sich die axiale Schottwand (22d) in dem Axialschnitt betrachtet geradlinig zwischen der vorderen Kammerwand (22a) und der hinteren.Kammerwand (22b) erstreckt.

5. Laufschaufel (20) nach einem der vorstehenden Ansprüche, bei welcher die axiale Schottwand (22d) einstückig mit der übrigen Laufschaufel (20) ausgebildet ist.

6. Laufschaufel (20) nach einem der Ansprüche 1 bis 4, bei welcher die axiale Schottwand (22d) als separates Teil in die Kammer (23) eingesetzt ist.

7. Laufschaufel (20) nach einem der vorstehenden Ansprüche, bei welcher jedenfalls ein Abschnitt der vorderen Dichtplatte (22e) radial innerhalb der hinteren Dichtplatte (22f) angeordnet ist.

8. Turbinenmodul mit einer Laufschaufel (20) nach einem der vorstehenden Ansprüche.

9. Turbinenmodul nach Anspruch 8, bei welcher ein Laufschaufelkranz, an welchem die Laufschaufel (20) angeordnet ist, vor einem hinteren Leitschaufelkranz mit einer hinteren Leitschaufel (32) angeordnet ist, wobei die hintere Dichtplatte (22f) der Laufschaufel (20) radial zwischen einer Innenplattform (32a) der hinteren Leitschaufel (32) und einem Dichtsteg (33) des hinteren Leitschaufelkranzes angeordnet ist.

10. Turbinenmodul nach Anspruch 8 oder 9, bei welcher ein Laufschaufelkranz, an welchem die Laufschaufel (20) angeordnet ist, hinter einem vorderen Leitschaufelkranz mit einer vorderen Leitschaufel (30) angeordnet ist, wobei die vordere Dichtplatte (22e) der Laufschaufel (20) radial zwischen einer Innenplattform (30a) der vorderen Leitschaufel (30) und einem Dichtsteg (31) des vorderen Leitschaufelkranzes angeordnet ist.

11. Verfahren zum Betreiben eines Turbinenmoduls nach einem der Ansprüche 8 bis 10, bei welchem in den radial äußeren Kammerwandbereich (23b) der Laufschaufel (20) aus dem Heißgaskanal (5) der Strömungsmaschine (1) Heißgas einströmt und in den radial inneren Kammerwandbereich (23a) aus einem Scheibenrandbereich (26) ein Sperrfluid (27a) einströmt.

12. Verfahren nach Anspruch 11, bei welchem ein Druck, der sich in dem radial inneren Kammerwandbereich (23a) einstellt, um den Betrag nach höchstens 20 % von einem Druck abweicht, der sich in dem radial äußeren Kammerwandbereich (23b) einstellt.

13. Verwendung einer Laufschaufel (20) nach einem der Ansprüche 1 bis 7 in einem Verfahren gemäß Anspruch 11 oder 12.

## Claims

1. Rotor blade (20) to be arranged in a hot gas channel (5) of a turbomachine (1), which rotor blade (20) has an airfoil (21) and, radially inside thereof, an inner platform (22) in which a chamber (23) is formed which
- is delimited radially outwardly by an inner shroud (22c) of the inner platform (22), and
- is delimited axially between a front chamber wall (22a) and a rear chamber wall (22b) of the inner platform (22),
- a front sealing plate (22e) being arranged on the front chamber wall (22a) and extending axially toward the front away from the chamber (23), and
- a rear sealing plate (22f) being arranged on the rear chamber wall (22b) and extending axially toward the rear away from the chamber (23),
and an axial bulkhead wall (22d) also being arranged in the chamber (23) and
- dividing the chamber (23) into a radially inner chamber wall region (23a) and a radially outer chamber wall region (23b),
**characterized in that**
- the axial bulkhead (22d), viewed in an axial section, extends into the front chamber wall (22a) at the level of the front sealing plate (22e) and extends into the rear chamber wall (22b) at the level of the rear sealing plate (22f).

2. Rotor blade (20) according to claim 1, wherein, viewed in an axial section, the axial bulkhead wall (22d) extends into the rear chamber wall (22b) in such a way that, on the rear chamber wall (22b), an extension of the axial bulkhead wall (22d) overlaps to the rear with the rear sealing plate (22f) in the direction of extension of said bulkhead wall, taking into account any radius of curvature of the rear sealing plate (22f) radially inwardly and/or outwardly, the rear sealing plate (22f), including any radii of curvature with which said rear sealing plate extends radially inwardly and/or radially outwardly into the chamber wall, being used as the basis.

3. Rotor blade (20) according to either of the preceding claims, wherein, viewed in an axial section, the axial bulkhead (22d) extends into the front chamber wall (22a) in such a way that, on the front chamber wall (22a), an extension of the axial bulkhead (22d) overlaps to the front with the front sealing plate (22e), taking into account any radius of curvature of the front sealing plate (22e) radially inwardly and/or radially outwardly, the front sealing plate (22e), including any radii of curvature with which said rear sealing plate extends radially inwardly and/or radially outwardly into the chamber wall, being used as the basis.

4. Rotor blade (20) according to any of the preceding claims, wherein the axial bulkhead wall (22d), viewed in the axial section, extends in a straight line between the front chamber wall (22a) and the rear chamber wall (22b).

5. Rotor blade (20) according to any of the preceding claims, wherein the axial bulkhead wall (22d) is formed integrally with the rest of the rotor blade (20).

6. Rotor blade (20) according to any of claims 1 to 4, wherein the axial bulkhead wall (22d) is inserted as a separate part into the chamber (23).

7. Rotor blade (20) according to any of the preceding claims, wherein at least one portion of the front sealing plate (22e) is arranged radially inside the rear sealing plate (22f).

8. Turbine module comprising a rotor blade (20) according to any of the preceding claims.

9. Turbine module according to claim 8, wherein a rotor blade ring, on which the rotor blade (20) is arranged, is arranged in front of a rear guide vane ring having a rear guide vane (32), the rear sealing plate (22f) of the rotor blade (20) being arranged radially between an inner platform (32a) of the rear guide vane (32) and a sealing projection (33) of the rear guide vane ring.

10. Turbine module according to either claim 8 or claim 9, wherein a rotor blade ring, on which the rotor blade (20) is arranged, is arranged behind a front guide vane ring having a front guide vane (30), the front sealing plate (22e) of the rotor blade (20) being arranged radially between an inner platform (30a) of the front guide vane (30) and a sealing projection (31) of the front guide vane ring.

11. Method for operating a turbine module according to any of claims 8 to 10, wherein hot gas flows into the radially outer chamber wall region (23b) of the rotor blade (20) from the hot gas channel (5) of the turbomachine (1) and a barrier fluid (27a) flows into the radially inner chamber wall region (23a) from a disk edge region (26).

12. Method according to claim 11, wherein a pressure which is set in the radially inner chamber wall region (23a) deviates by an amount of at most 20% from a pressure which is set in the radially outer chamber wall region (23b).

13. Use of a rotor blade (20) according to any of claims 1 to 7 in a method according to either claim 11 or claim 12.

## Revendications

1. Aube mobile (20) à disposer dans un canal de gaz chaud (5) d'une turbomachine (1), laquelle aube mobile (20) présente une pale d'aube (21) et, radialement à l'intérieur de celle-ci, une plate-forme intérieure (22) dans laquelle est réalisée une chambre (23) qui
- est délimitée radialement vers l'extérieur par une bande de recouvrement intérieure (22c) de la plate-forme intérieure (22), et
- est délimitée axialement entre une paroi de chambre avant (22a) et arrière (22b) de la plate-forme intérieure (22),
- une plaque d'étanchéité avant (22e) étant disposée sur la paroi de chambre avant (22a) et s'étendant axialement vers l'avant depuis la chambre (23), et
- une plaque d'étanchéité arrière (22f) étant disposée sur la paroi de chambre arrière (22b) et s'étendant axialement vers l'arrière depuis la chambre (23),
et une paroi de cloison axiale (22d) étant en outre disposée dans la chambre (23), laquelle paroi de cloison axiale
- divise la chambre (23) en une zone de paroi de chambre radialement intérieure (23a) et radialement extérieure (23b),
**caractérisée en ce que**
- la paroi de cloison axiale (22d), vue en coupe axiale, pénètre dans la paroi de chambre avant (22a) au niveau de la plaque d'étanchéité avant (22e) et dans la paroi de chambre arrière (22b) au niveau de la plaque d'étanchéité arrière (22f).

2. Aube mobile (20) selon la revendication 1, dans laquelle, vue en coupe axiale, la paroi de cloison axiale (22d) pénètre dans la paroi de chambre arrière (22b) de telle sorte qu'au niveau de la paroi de chambre arrière (22b), une extension de la paroi de cloison axiale (22d) dans la direction de son étendue vers l'arrière présente un chevauchement avec la plaque d'étanchéité arrière (22f), en tenant compte d'un éventuel rayon de courbure de la plaque d'étanchéité arrière (22f) radialement à l'intérieur et/ou à l'extérieur, la plaque d'étanchéité arrière (22f) étant alors utilisée en incluant les rayons de courbure éventuels avec lesquels elle pénètre dans la paroi de chambre radialement à l'intérieur et/ou radialement à l'extérieur.

3. Aube mobile (20) selon l'une des revendications précédentes, dans laquelle, vue en coupe axiale, la paroi de cloison axiale (22d) pénètre dans la paroi de chambre avant (22a) de telle sorte qu'au niveau de la paroi de chambre avant (22a), une extension de la paroi de cloison axiale (22d) dans la direction de son étendue vers l'avant présente un chevauchement avec la plaque d'étanchéité avant (22e), en tenant compte d'un éventuel rayon de courbure de la plaque d'étanchéité avant (22e) radialement à l'intérieur et/ou à l'extérieur, la plaque d'étanchéité avant (22e) étant alors utilisée en incluant les rayons de courbure éventuels avec lesquels elle pénètre dans la paroi de chambre radialement à l'intérieur et/ou radialement à l'extérieur.

4. Aube mobile (20) selon l'une des revendications précédentes, dans laquelle la paroi de cloison axiale (22d), vue en coupe axiale, s'étend en ligne droite entre la paroi de chambre avant (22a) et la paroi de chambre arrière (22b).

5. Aube mobile (20) selon l'une des revendications précédentes, dans laquelle la paroi de cloison axiale (22d) est réalisée d'une seule pièce avec l'aube mobile restante (20).

6. Aube mobile (20) selon l'une des revendications 1 à 4, dans laquelle la paroi de cloison axiale (22d) est insérée dans la chambre (23) en tant que pièce séparée.

7. Aube mobile (20) selon l'une des revendications précédentes, dans laquelle, dans tous les cas, une section de la plaque d'étanchéité avant (22e) est disposée radialement à l'intérieur de la plaque d'étanchéité arrière (22f).

8. Module de turbine comportant une aube mobile (20) selon l'une des revendications précédentes.

9. Module de turbine selon la revendication 8, dans lequel une couronne d'aube mobile, sur laquelle est disposée l'aube mobile (20), est disposée devant une couronne d'aube directrice arrière comportant une aube directrice arrière (32), la plaque d'étanchéité arrière (22f) de l'aube mobile (20) étant disposée radialement entre une plate-forme intérieure (32a) de l'aube directrice arrière (32) et une entretoise d'étanchéité (33) de la couronne d'aube directrice arrière.

10. Module de turbine selon la revendication 8 ou 9, dans lequel une couronne d'aube mobile, sur laquelle est disposée l'aube mobile (20), est disposée derrière une couronne d'aube directrice avant comportant une aube directrice avant (30), la plaque d'étanchéité avant (22e) de l'aube mobile (20) étant disposée radialement entre une plate-forme intérieure (30a) de l'aube directrice avant (30) et une entretoise d'étanchéité (31) de la couronne d'aube directrice avant.

11. Procédé de fonctionnement d'un module de turbine selon l'une des revendications 8 à 10, dans lequel du gaz chaud s'écoule dans la zone de paroi de chambre radialement extérieure (23b) de l'aube mobile (20) depuis le canal de gaz chaud (5) de la turbomachine (1) et un fluide barrière (27a) s'écoule dans la zone de paroi de chambre radialement intérieure (23a) depuis une zone de bord de disque (26).

12. Procédé selon la revendication 11, dans lequel une pression qui est établie dans la zone de paroi de chambre radialement intérieure (23a) s'écarte d'au plus de 20 % d'une pression qui est établie dans la zone de paroi de chambre radialement extérieure (23b).

13. Utilisation d'une aube mobile (20) selon l'une des revendications 1 à 7 dans un procédé selon la revendication 11 ou 12.
